# EUROPÄISCHE PATENTANMELDUNG

(11) **EP 2 535 245 A2**
(43) Veröffentlichungstag der Anmeldung: **19.12.2012**
(21) Anmeldenummer: 12004487.0
(22) Anmeldetag: 14.06.2012
(51) Int. Cl.: B62D 33/04

(54) **Kofferaufbau für Nutzfahrzeuge sowie Verfahren zur Herstellung von Dachboden- und Seitenwandteilen für Kofferaufbauten**

(30) Priorität: 18.06.2011 DE 102011104818
(71) Anmelder: Fahrzeugwerk Bernard Krone GmbH, 48480 Spelle (DE)
(72) Erfinder: Holbech,Soeren, 8883 Gjern (DK); Bach, Joergen, 7470 Karup I (DK)
(74) Vertreter: Pott, Ulrich

(57) **Zusammenfassung**

Die Erfindung bezieht sich auf einen Kofferaufbau für Nutzfahrzeug mit aus Sandwichpaneelen gefertigten Dach- 4, Seitenwand- 7 und/oder Bodenteilen 10, an denen ein Aufbauteil 1, 1.1, 1.5, 1.6 wie ein metallischer Eckverbinder, eine Strebe, ein Profil und dergleichen festlegbar ist, wobei die Sandwichpaneele eine Innenwandung 6 und eine Außenwandung 3 aus einem GFK-Material aufweisen und zwischen der Innenwandung 6 und der Außenwandung 3 ein Schaummaterial 5 vorgesehen ist. Um das Aufbauteil sicher an einer Wandung zu haltern, ist vorgesehen, dass das Aufbauteil 1, 1.1, 1.5, 1.6 in die Innenwandung und/oder die Außenwandung 3 eines Seitenwand- 7, Boden- 10 und/oder Dachteils 4 eingebettet und zumindest bereichsweise von dieser untergriffen ist und im Wesentlichen flächenbündig in die Innen- 6 bzw. Außenwandung 3 übergeht (Fig. 2).

## Beschreibung

Die Erfindung bezieht sich auf einen Kofferaufbau für Nutzfahrzeuge mit aus Sandwichpaneelen gefertigten Dach-, Seitenwand- und/oder Bodenteilen, an denen ein Aufbauteil wie ein metallischer Eckverbinder, eine Strebe, ein Profil oder dergleichen festlegbar ist, wobei die Sandwichpaneele eine Innenwandung und eine Außenwandung aus einem GFK-Material aufweisen und zwischen der Innenwandung und der Außenwandung ein ausgehärtetes Schaummaterial vorgesehen ist.

Derartige Kofferaufbauten für Nutzfahrzeuge sind bekannt. Diese dienen beispielsweise als Kühlfahrzeugaufbauten, wobei pflegeleichte und zum überwiegenden Teil auch 100 % FCKW-freie GFK-Sandwichpaneele Verwendung finden. Sollen Boden, Seitenwand- und/oder Dachteile miteinander verbunden werden, werden in herkömmlicher Weise metallische Eckverbinder eingesetzt, die auf die Außenwandungen von Dach- und Bodenteilen bzw. Seitenwandungsteilen aufgeklebt werden. Entsprechendes gilt auch für sonstige Aufbauteile wie beispielsweise im Inneren eines Kofferaufbaus anzubringende Befestigungselemente, Verstärkungsstreben und dergleichen Aufbauteile. Das nachträgliche Anbringen von Aufbauteilen ist aufwändig und setzt endbearbeitete Klebeflächen voraus, um die Aufbauteile mit einem Kleber sicher zu halten. Zudem stehen solche Aufbauteile gegenüber den Innen- und Außenwandungen vor, was sich ungünstig auf die Außen- und Innenabmessungen des Aufbaus auswirkt. Auch sind solche hervorstehenden Aufbauteile stoßempfindlich.

Es ist daher Aufgabe der vorliegenden Erfindung, diese Nachteile zu vermeiden und einen Koffer für Nutzfahrzeuge zu schaffen, bei dem Aufbauteile sicher und platzsparend vorgesehen werden können.

Zur Lösung dieser Aufgabe zeichnet sich der Kofferaufbau für Nutzfahrzeuge der eingangs genannten Art dadurch aus, dass das Aufbauteil in die Innen- oder Außenwandung eines Seitenwand-, Boden- oder Dachteils eingebettet und zumindest bereichsweise von der Innen- oder Außenwandung untergriffen ist und dass das Aufbauteil im Wesentlichen flächenbündig in die Innen- bzw. Außenwandung übergeht.

Damit ist das Aufbauteil in die Innen- und/oder Außenwandung des Kofferaufbaus zu integrieren, so dass es schon während des Fertigungsprozesses eines Seitenwandteils, eines Bodens und/oder eines Dachteils darin zu integrieren ist. Das Aufbauteil wird in den Laminierungsvorgang der Innenwandung bzw. der Außenwandung eines Bodenteils, eines Dachteils oder eines Seitenwandteils so eingebracht, dass das Gelcoat und das Laminat auf Teile des Aufbauteils aufgebracht wird, und somit einenends das Aufbauteil begrenzt. Daran schließt sich dann während des Herstellprozesses das Gelcoat und das Laminat zur Bildung des Paneels an, so dass das Aufbauteil im Wesentlichen flächenbündig mit dem angrenzenden Bereich der Seitenwandung bzw. der Außenwandung abschließt. Damit ist das Aufbauteil im Wesentlichen planeben in die Außenwandung bzw. Innenwandung zu integrieren und wird während des Aushärtevorganges dauerhaft fest mit der Innenwandung bzw. Außenwandung verbunden, so dass eine besondere Verklebung eines Aufbauteils, beispielsweise eines metallischen Eckverbinders, nicht mehr notwendig ist. Damit ist ein Kofferaufbauteil geschaffen, bei dem sicher und fest und mit vermindertem Aufwand Aufbauteile vorgesehen werden können, die zudem nicht mehr gegenüber einer Innenwandung bzw. einer Außenwandung hervorstehen.

Ein Eckverbinder kann so ausgebildet sein, dass er abgewinkelt ausgebildet ist, wobei zum einen der Eckverbinder in z.B. eine Außenwandung eines Dachteils eingebettet ist und einen abgewinkelten Aufnahmebereich aufweist, in den z.B. eine ebenfalls mit einer Innenwandung und einer Außenwandung versehene Seitenwandung eingeführt werden kann, wobei dann die Seitenwandung mit dem Eckverbinder als Aufbauteil zu verkleben ist.

Um das Gelcoat und das Laminat mit dem Aufbauteil zu verbinden, kann dieses mit Rillen, mit Löchern, mit bolzenförmigen Erhebungen oder sonstigen konstruktiven Verankerungsmitteln versehen sein, wobei in Zwischenräume zwischen diesen Verankerungsmitteln während des Herstellungsprozesses das Gelcoat und das Laminat einzubringen ist, womit ein inniger fester Verbund zwischen Laminat und Gelcoat sowie dem Aufbauteil erzeugt wird.

Weitere vorteilhafte Ausgestaltungen des Kofferaufbaus ergeben sich aus den Ansprüchen 2 bis 10.

Des Weiteren bezieht sich die Erfindung auf ein Verfahren zur Herstellung eines Seitenwandteils, eines Dachteils und eines Bodenteils für einen Kofferaufbau. Um in eine Innenwandung und/oder eine Außenwandung eines solchen Seitenwandteils, eines Dachteils bzw. eines Bodenteils ein Aufbauteil direkt bei der Herstellung der Wandteile einzubetten und zu integrieren, sieht die Erfindung folgende Verfahrensschritte vor:
a) Platzieren des Aufbauteils auf einem Tisch;
b) Auftragen eines Gelcoats auf einen Bereich des Aufbauteiles und einen angrenzenden Bereich in einer eingestellten Abmessung auf dem Tisch;
c) Aufbringen eines Laminats auf das Gelcoat;
d) Einbauen oder Einschäumen eines Schaummaterials auf das Laminat;
e) eine zweite Wandung wird auf einem separaten Tisch separat durch ein Auftragen von Gelcoat und durch ein anschließendes Auftragen von Laminat in den eingestellten Abmessungen hergestellt;
f) die erste Wandung mit dem eingebetteten Aufbauteil und dem eingebrachten Schaummaterial wird mit der separat hergestellten zweiten Wandung verklebt.

Bei diesen Verfahrensschritten ist auf einfache Weise ein Seitenwandteil, ein Dachteil und/oder ein Bodenteil für einen Kofferaufbau mit dem integrierten Aufbauteil herzustellen. Wesentliche weitere Verfahrensmerkmale ergeben sich aus den Patentansprüchen 12 bis 18.

In der Zeichnung zeigen:
- Fig. 1 a), b), c): Ausführungsbeispiele von Aufbauteilen zu Beginn eines Fertigungsprozesses;
- Fig. 2 a), b): ein Ausführungsbeispiel eines Eckverbinders als Aufbauteil im noch nicht montierten Zustand (a) und im fertig montierten Zustand (b);
- Fig. 3 a), b): eine alternative Ausführungsvariante eines Eckverbinders des Aufbauteils in einer zu den Fig. 2 a) und 2 b) analogen Darstellung;
- Fig. 4 a), b): ein weiteres Ausführungsbeispiel eines Eckverbinders als Aufbauteil in einer zu den Fig. 2 a), b) und 3 a), b) analogen Darstellung;
- Fig. 5: ein Ausführungsbeispiel eines Aufbauteils im Bereich eines Bodenteils mit daran befestigtem Seitenwandteil.

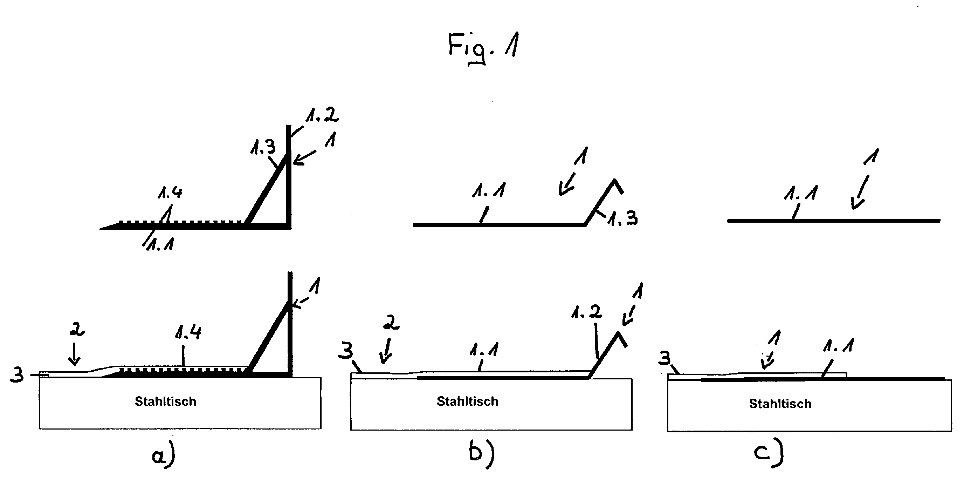

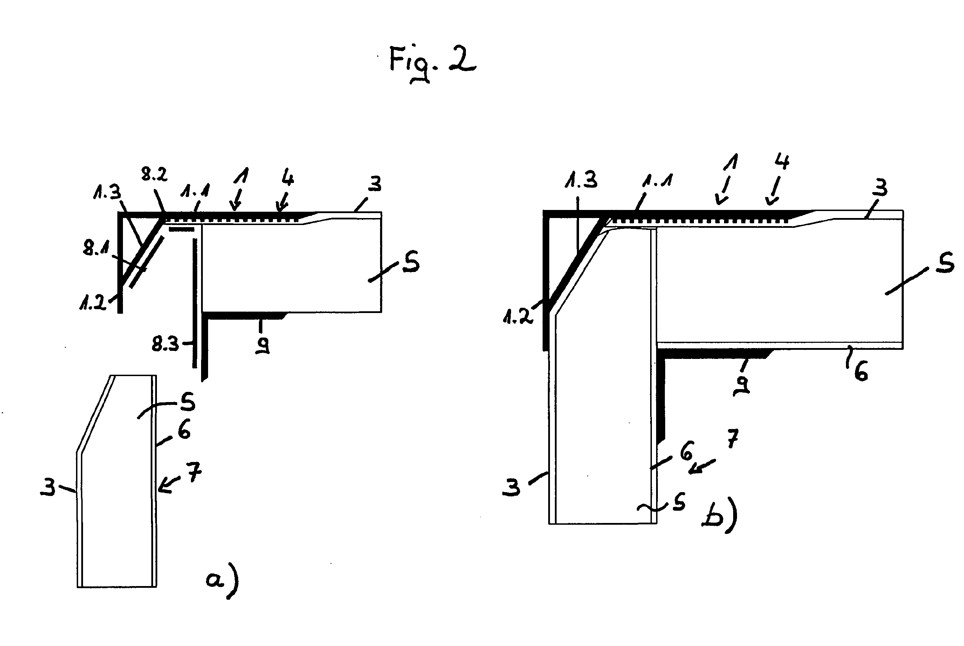

In Fig. 1 sind in Fig. 1 a), 1 b) und 1 c) verschiedene Aufbauteile dargestellt, die in Wandteile eines Kofferaufbaus integriert werden sollen. In Fig. 1 a) ist ein Eckverbinder 1 dargestellt, der abgewinkelte Schenkel 1.1 und 1.2 aufweist, die durch eine Diagonalstrebe 1.3 miteinander verbunden sind. An dem Schenkel 1.1 sind mit Abstand zueinander Erhebungen und Rillen 1.4 vorgesehen, wobei in die Rillen 1.4 ein Gelcoat und ein Laminat eindringen kann, wie dies in der Fig. 1 a) unten dargestellt ist. Dieses GFK-Material erstreckt sich über weite Bereiche des Schenkels 1.1 bis zur Diagonalstrebe 1.3. Am Ende des Schenkels 1.1 läuft dieser im Wesentlichen spitz zu bzw. verjüngt sich, so dass das GFK-Material an diesem vorbeilaufend auf den Stahltisch während der Herstellung zu Liegen kommt, so dass im fertigen Zustand planeben das GFK-Material in den auf dem Stahltisch liegenden Bereich des Schenkels 1.1 übergeht. Dieser Bereich soll später die Außenwandung 2 eines Dachteils bilden. Auf die ersichtliche Gelcoat-Laminat-Schicht 3 wird, im Einzelnen nicht näher dargestellt, im weiteren Fertigungsvorgang ein Blockschaum eingebaut bzw. ein auswertbarer Schaum eingeschäumt. Auf einem separaten Stahltisch wird eine separate Wandung erstellt, wiederum aus Laminat mit Gelcoat, die im besagten Ausführungsbeispiel die Innenwandung bilden sollten. Sind beide Wandungen, also die Außenwandung und die Innenwandung, ausgehärtet, werden sie miteinander verklebt. Das Ausführungsbeispiel nach Fig. 1 a) ist vergrößert noch einmal in Fig. 2 a) und 2 b) dargestellt.

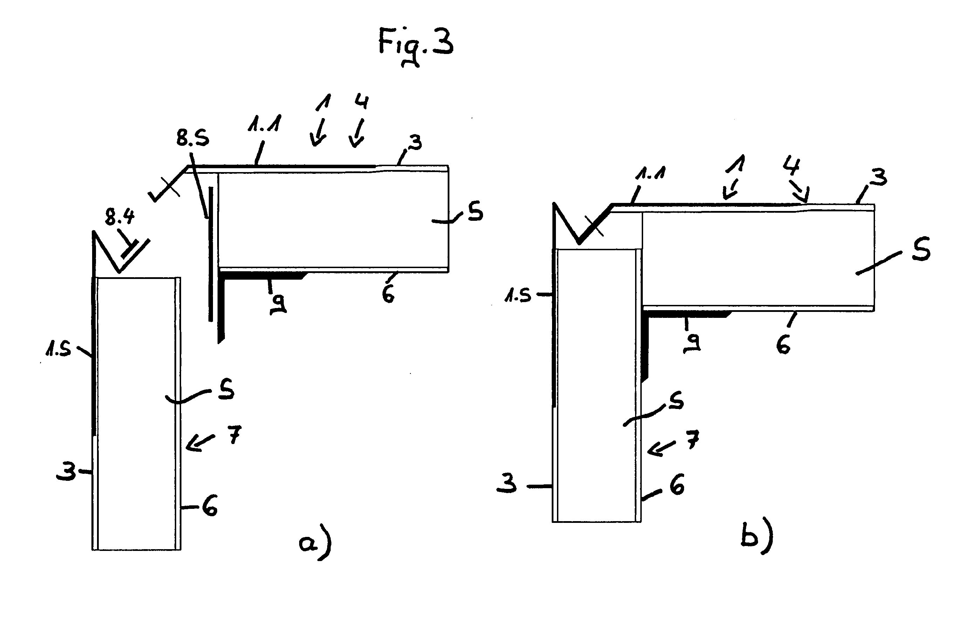

In dem Ausführungsbeispiel nach Fig. 1 b) ist ebenfalls ein Teil eines alternativen Eckverbinders dargestellt, der aus zwei Teilen bestehen soll, wie dies näher in Fig. 3 a), b) dargestellt ist. Dieser hat ebenfalls einen Schenkel 1.1 und einen abgekröpften Schenkel 1.2. Der Schenkel 1.1 ist im Wesentlichen analog gestaltet wie der Schenkel 1.1 bei dem Ausführungsbeispiel nach Fig. 1 a), jedoch sind hier keine Rillen 1.4 vorgesehen. Ansonsten ist auch die hierdurch gebildete Außenwandung analog gestaltet, wie dies auch näher die Fig. 3 a) und 3 b) verdeutlichen.

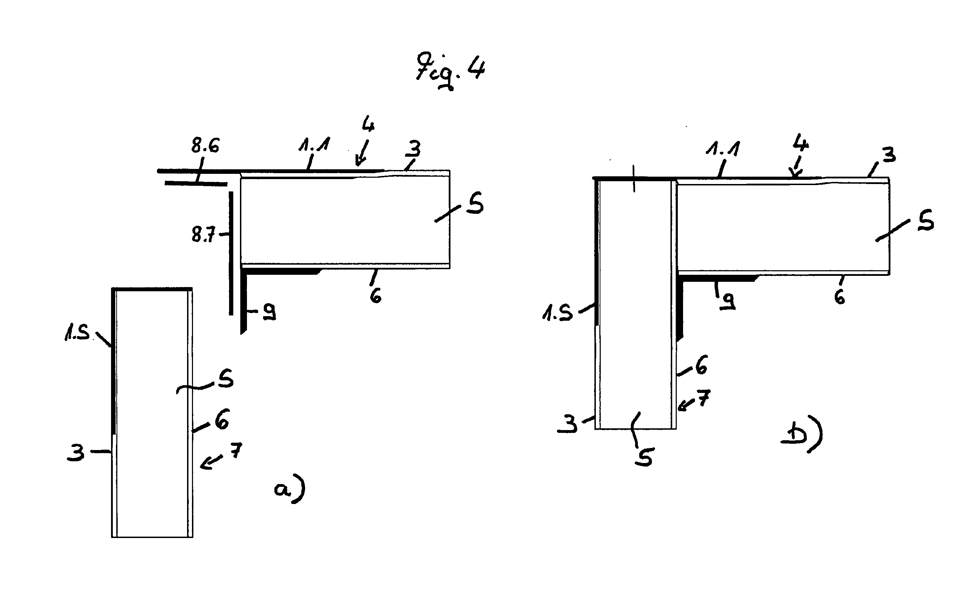

In Fig. 1 c) ist ein Teil eines Eckverbinders als Aufbauteil dargestellt, der ebenfalls mehrteilig ausgebildet ist. Hier ist ein flaches Stahlprofil als Eckverbindungsteil 1.1 vorgesehen, das näher aus der Fig. 4 hervorgeht und mit anderen Teilen den Eckverbinder bildet. Ansonsten ist auch hier der Eckverbinder analog zu den Ausführungsbeispielen nach den Fig. 1 a) und 1 b) gestaltet, jedoch ist hier dafür Sorge getragen, dass noch ein freies Ende des flachen Stahlprofils nicht von der Gelcoat-Laminat-Schicht 3 bedeckt ist.

Fig. 2 a) und 2 b) (Fig. 2 a) nicht fertig montiert, Fig. 2 b) fertig montiert) zeigen den Eckverbinder 1 nach dem Ausführungsbeispiel nach Fig. 1 a) als Aufbauteil eines Dachteils 4. Das Dachteil 4 weist eine Schaumschicht 5 auf sowie die separat hergestellte Innenwandung 6, die mit der Schaumschicht 5 während der Herstellung verklebt wurde. Die Schicht 3 bildet die Außenwandung des Dachteiles 4. Das Aufbauteil 1 als Eckverbinder ist fest in die Außenschicht 3 als Außenwandung eingebettet, wobei der Schenkel 1.1 planeben bzw. bündig in die Schicht 3 als Außenwandung übergeht, wobei jedoch der Schenkel 1.1 in seinen wesentlichen Längenerstreckungen von der Außenwandung untergriffen ist. Die Schaumschicht 5 erstreckt sich so weit, dass ein Raum freibleibt, in die ein Seitenwandteil 7 einzubringen ist. Dieses Seitenwandteil 7 besteht aus einer Innenwandung 6, einer Außenwandung 3 und einer Schaumschicht 5. Wie in Fig. 2 a) angedeutet, wird dieses Seitenwandteil 7 an den markierten Stellen 8.1, 8.2 und 8.3 mit dem Eckverbinder 4 an Stirnflächen der Schaumschicht 5 und einem weiteren inneren Eckverbinder 9, der an der Innenschicht 6 verklebt ist, insgesamt angebracht, und zwar durch Verklebung.

Fig. 3 zeigt mit den Abbildungen a) und b) analoge Darstellungen zu Fig. 2 a) und b), jedoch mit einem Eckverbinder, der insgesamt zweiteilig ausgebildet ist, und zum einen das Teil 1 aus Fig. 1 b) des Dachteils 4 aufweist. Auch hier ist wiederum in dem Dachteil 4 eine Schaumschicht 5 und eine Innenwandung 6 vorgesehen und die obere Schicht 3. Das Seitenwandteil 7 hat wiederum eine Schaumschicht 5, eine Außenwandung 3 und eine Innenwandung 6. Hierbei ist jedoch in die aus Gelcoat und Laminat bestehende Außenwandung 3 der Seitenwand 7 in analoger Weise wie bei dem Dachteil 4 ein weiteres Aufbauteil 1.5 eingebettet, und zwar in analoger Weise wie bei dem Dachteil 4, das seinerseits ebenfalls abgekröpfte Enden hat, die wie bei 8.4 angedeutet, miteinander zu verkleben sind. Ebenfalls wird das Seitenwandteil 7 mit der Schaumschicht 5 und dem inneren Eckverbinder 9 verklebt, wie bei 8.5 angedeutet.

In Fig. 4 a) und 4 b) ist ein flaches Stahlprofil nach Fig. 1 c) in dem Dachteil 4 vogesehen. Dieses flache Stahlprofil 1.1 als Aufbauteil erstreckt sich in einem Maß über die Stirnkante des Dachteils 4 hinaus, so dass dort die Stirnkante des Seitenwandteils 7 angeschlossen werden kann, wieder mit der Innenwandung 6, der Außenwandung 3 und dem Schaummaterial 5. Hierbei ist es so, dass ein L-Profil in die GFK-Außenwandungsschicht 3 eingelassen wurde in der zuvor beschriebenen Weise, wobei der kleinere L-Schenkel die Stirnkante des Seitenwandteils umgrenzt, so dass es bei den Klebestellen 8.6 und 8.7 mit einem Teil des Schenkels 1.1, dem Schaumblock 5 des Dachteils 4 und dem wiederum vorgesehenen Innenwinkel 9 verklebt werden kann.

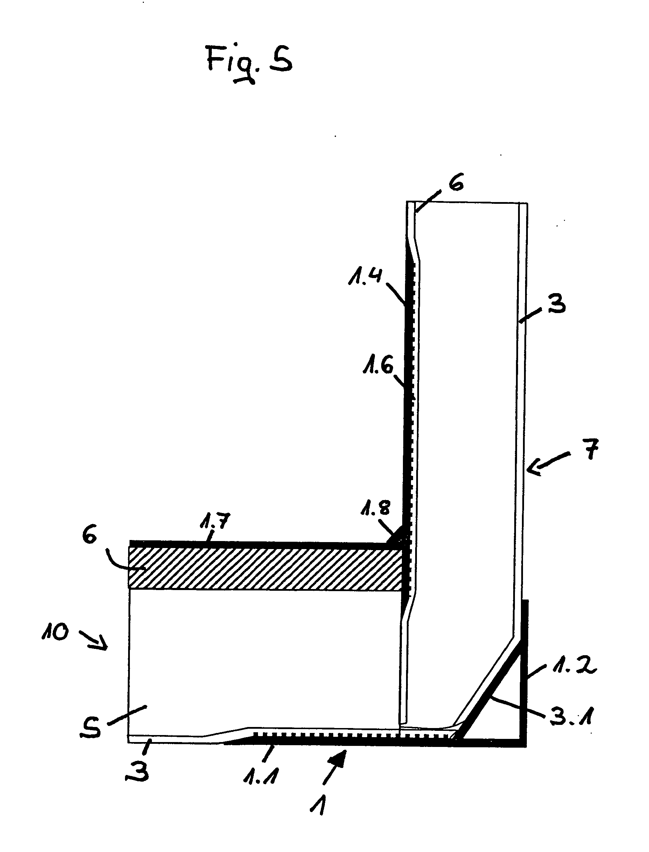

In Fig. 5 ist ein weiteres Ausführungsbeispiel gezeigt, und zwar unter Verwendung des abgewinkelten Profils nach Fig. 1 a), diesmal jedoch eingebettet in die Außenwandung 3 eines Bodenteils 10, der wiederum eine Schaumschicht 5 aufweist und eine Innenwandung 6, die in diesem Ausführungsbeispiel jedoch dicker ausgebildet ist als die Innenwandung des Seitenwandteils 7. Hier ist auch auf der Innenseite des Seitenwandteils 7 eine Stahlplatte 1.6 einlaminiert, die entsprechende Rillen 1.4 am unteren Schenkel 1.1 des Eckverbinders 1 aufweist. Die Stahlplatte 1.6 ist vollständig von der Innenwandung 6 untergriffen und in diese eingebettet, hat wiederum spitz zulaufende Enden, so dass die Stahlplatte 1.6 wiederum flächenbündig in die Außenflächen der Innenwandung 6 übergeht. Die Innenwandung 6 des Bodenteils ist ebenfalls mit einer Stahlplatte 1.7 versehen, so dass die Platten 1.6 und 1.7 bei 1.8 miteinander verschweißt werden können, nachdem die Seitenwandung 7 in den schuhförmigen Raum, der von dem Schenkel 1.2, der Diagonalstrebe 1.3 sowie einem kleinen Teil des Schenkels 1.1 des Eckverbinders begrenzt wird, eingesteckt worden ist.

## Patentansprüche

1. Kofferaufbau für Nutzfahrzeuge mit aus Sandwichpaneelen gefertigten Dach- (4), Seitenwand- (7) und/oder Bodenteilen (10), an denen ein Aufbauteil (1, 1.1, 1.5, 1.6) wie ein metallischer Eckverbinder eine Strebe, ein Profil und dgl. festlegbar ist, wobei die Sandwichpaneele eine Innenwandung (6) und eine Außenwandung (3) aus einem GFK-Material aufweisen und zwischen der Innenwandung (6) und der Außenwandung (3) ein aushärtbares Schaummaterial (5) vorgesehen ist, **dadurch gekennzeichnet, dass** das Aufbauteil (1, 1.1, 1.5, 1.6) in die Innen- (6) oder Außenwandung (3) eines Seitenwand- (7), Boden- (10) und/oder Dachteils (4) eingebettet und zumindest bereichsweise von dieser untergriffen ist und im Wesentlichen flächenbündig in die Innen- (6) bzw. Außenwandung (3) übergeht.

2. Kofferaufbau nach Anspruch 1, **dadurch gekennzeichnet, dass** das Aufbauteil als Eckverbinder (1) ausgebildet ist und ein in den Eckverbinder (1) eingeführtes Seitenwand- (7), Boden- (10) und/oder Dachteil (4) mit dem Eckverbinder (1) verklebt ist.

3. Kofferaufbau nach Anspruch 1, **dadurch gekennzeichnet, dass** das Aufbauteil als Eckverbinder (1) ausgebildet ist und das in den Eckverbinder (1) eingeführte Seitenwand- (7), Dach- (4) und/oder Bodenteil (10) seinerseits ein in einer Innenwandung (6) aus dem GFK-Material eingelassenen metallischen Verbinder (1.6) aufweist, der mit einem anderen Eckverbinder (1.7) verschweißt ist.

4. Kofferaufbau nach einem der Ansprüche 1 bis 3, **dadurch gekennzeichnet, dass** ein in das GFK-Material einer Außen- (3) und/oder einer Innenwandung (6) eingebetteter Bereich eines Aufbauteils (1) Vorsprünge (1.4) aufweist.

5. Kofferaufbau nach Anspruch 4, **dadurch gekennzeichnet, dass** die Vorsprünge (1.4) mit Abstand zueinander angeordnete Leisten, Rillen und/oder als bolzenförmige Erhebungen ausgebildet sind.

6. Kofferaufbau nach einem der Ansprüche 1 bis 5, **dadurch gekennzeichnet, dass** das Aufbauteil (1) in einem in der Innen- (6) oder der Aussenwandung (3) eingebetteten Bereich zumindest ein sich verjüngendes Ende hat.

7. Kofferaufbau nach einem der Ansprüche 1 bis 6, **dadurch gekennzeichnet, dass** das Aufbauteil (1) als Eckverbinder abgewinkelt ausgebildet ist mit einer Diagonalstrebe (1.3) im Eckbereich.

8. Kofferaufbau nach einem der Ansprüche 1 bis 7, **dadurch gekennzeichnet, dass** das Aufbauteil (1) als Eckverbinder sowohl an der Außenwandung (3) eines Bodenteils (10) und eines Seitenwandteils (7) als auch an einer Innenwandung (6) des Bodenteils (10) und des Seitenwandteils (7) vorgesehen ist.

9. Kofferaufbau nach einem der Ansprüche 1 bis 8, **dadurch gekennzeichnet, dass** ein Aufbauteil (1) als Eckverbinder zweiteilig ausgebildet ist mit einem ersten Bereich (1.5), der an einer Seitenwand vorgesehen ist und einem zweiten Bereich (1.1), der an einem Dachteil (4) oder einem Bodenteil (10) vorgesehen ist.

10. Kofferaufbau nach Anspruch 9, **dadurch gekennzeichnet, dass** der zweiteilige Eckverbinder (1, 1.1, 1.5, 1.6) abgekröpfte Endbereiche hat, die ineinander greifen und miteinander verbunden sind.

11. Verfahren zur Herstellung eines Seitenwandteils, eines Dachteils und/oder eines Bodenteils für einen Kofferaufbau mit einem in eine Seitenwandung und/oder eine Außenwandung eingebetteten Aufbauteil nach einem der Ansprüche 1 bis 10, **gekennzeichnet durch** folgende Verfahrensschritte:
a) Platzieren des Aufbauteils (1) auf einen Tisch;
b) Auftragen eines Gelcoats auf einen Bereich des Aufbauteils (1) und eines angrenzenden Bereiches in eingestellter Abmessung zur Herstellung einer ersten Wandung;
c) Aufbringen eines Laminats auf das Gelcoat;
d) Einbauen oder Einschäumen eines Schaummaterials auf das Laminiat;
e) Separate Herstellung einer zweiten Wandung **durch** ein Auftragen von Gelcoat und Auftragen von Laminat in den eingestellten Abmessungen;
f) Verkleben der Wandung mit dem Aufbauteil und dem Schaummaterial mit der zweiten Wandung.

12. Verfahren nach Anspruch 11, **dadurch gekennzeichnet, dass** als Laminat ein Glasfaserlaminat verwendet wird.

13. Verfahren nach Anspruch 11 oder 12, **dadurch gekennzeichnet, dass** das Laminat mit einer Dicke von ca. 3 bis 4 mm aufgetragen wird.

14. Verfahren nach einem der Ansprüche 1 bis 13, **dadurch gekennzeichnet, dass** das Gelcoat aufgespritzt wird.

15. Verfahren nach einem der Ansprüche 1 bis 14, **dadurch gekennzeichnet, dass** das Laminat aufgespritzt wird.

16. Verfahren nach einem der Ansprüche 1 bis 15, **dadurch gekennzeichnet, dass** als Laminat ein Glasfaserlaminat verwendet wird.

17. Verfahren nach Anspruch 16, **dadurch gekennzeichnet, dass** als Laminat mit Glasfasern versetzter Polyesterharz verwendet wird.

18. Verfahren nach einem der Ansprüche 1 bis 17, **dadurch gekennzeichnet, dass** die erste mit dem Aufbauteil versehene Wandung die Außenwandung und die separat hergestellte zweite Wandung aus Laminat mit Gelcoat die Innenwandung bildet, die miteinander verklebt werden.
